# EUROPÄISCHE PATENTSCHRIFT

(11) **EP 2 736 938 B1**
(45) Veröffentlichungstag und Bekanntmachung des Hinweises auf die Patenterteilung: **01.07.2015**
(21) Anmeldenummer: 12738471.7
(22) Anmeldetag: 25.07.2012
(51) Int. Cl.: C08G 18/40, C08G 18/42, B32B 27/40

(54) **VERBUNDELEMENTE AUS THERMOPLASTISCHEN KUNSTSTOFFEN UND POLYURETHANEN SOWIE VERFAHREN ZU DEREN HERSTELLUNG**
COMPOSITE ELEMENTS COMPOSED FROM THERMOPLASTIC POLYMERS AND POLYURETHANES, AND PROCESS FOR PRODUCTION THEREOF
ÉLÉMENTS COMPOSITES EN MATIÈRES THERMOPLASTIQUES ET POLYURÉTHANES, AINSI QUE PROCÉDÉ POUR LEUR FABRICATION

(30) Priorität: 29.07.2011 DE 102011080134
(43) Veröffentlichungstag der Anmeldung: 04.06.2014
(73) Patentinhaber: Bayer Intellectual Property GmbH, 40789 Monheim (DE)
(72) Erfinder: ALBACH, Rolf, 51061 Köln (DE); NEFZGER, Hartmut, 50259 Pulheim (DE); VENNER, Petra, 51375 Leverkusen (DE); HASELBACH, Monika, 51061 Köln (DE)
(74) Vertreter: BIP Patents
(86) Internationale Anmeldenummer: PCT/EP2012/064625
(87) Internationale Veröffentlichungsnummer: WO 2013/017509

(56) Entgegenhaltungen:
- EP-A2- 1 063 249
- WO-A2-2010/072572

## Beschreibung

Die Erfindung betrifft Verbundelemente, die einen thermoplastischen Kunststoff und ein daran sich haftend anschließendes Polyurethan enthalten, ein Verfahren zu deren Herstellung und deren Verwendung.

Polyisocyanat-Polyadditionsprodukte erhältlich durch Umsetzung von Isocyanaten mit gegenüber Isocyanaten reaktiven Verbindungen sowie Verbundelemente von diesen Produkten mit weiteren Kunststoffen sind allgemein bekannt. Eine mechanische Belastung dieser Verbundelemente führt häufig zu einer unerwünschten Ablösung der Kunststoffe von den Polyisocyanat-Polyadditionsprodukten. Insbesondere beim Einsatz solcher Verbundelemente im Automobilbau, für die eine solche Belastung nicht ausgeschlossen werden kann, ist eine Ablösung der Polyisocyanat-Polyadditionsprodukten von den weiteren Kunststoffen und damit eine. Zerstörung des Verbundelementes nicht akzeptabel.

In WO 2010/072572 werden Verbundelemente aus Kunststoff, an den sich haftend ein Polyisocyanat-Polyadditionsprodukt (PUR) anschließt, beschrieben, wobei die PUR-Formulierung einen als Haftvermittler fungierenden Polyesterpolyalkohol enthält. Der Polyesterpolyalkohol ist durch Polykondensation einer Säurekomponente und einem oder mehreren Diolen herstellbar, wobei die Säurekomponente zu 83 bis 97 mol-% aus Adipinsäure und 3 bis 17 mol-% aus Phthalsäure, Isophthalsäure und/oder Terephthalsäure besteht. Die Verwendung anderer Säuren wird als nachteilig beschrieben, da größere Mengen anderer Säuren die Haftung verringern.

In DE 100 22 280 bzw. in DE 100 22 276 A1 wird beschrieben, dass zur Herstellung des Polyurethans die Polyesterpolyalkohole Funktionalitäten von 2 bis 3 und OH-Zahlen von 40 bis 400 mg KOH/g aufweisen müssen, wobei als Ausgangskomponenten Adipinsäure und/oder Phthalsäureanhydrid sowie Diole und/oder Triole eingesetzt werden. Als Diole/Triole werden genannt: Trimethylolpropan (TMP), Neopentylglykol, Polytetrahydrofuran (PTHF), Ethylenglykol, Propylen-1,3-glykol, Pentandiol-1,5, Hexandiol-1,6, Butandiol-1,4, Diethylenglykol, Triethylenglykol, Dipropylenglykol, Tripropylenglykol, Tetraethylenglykol und Tetrapropylenglykol.

In DE 199 28 608 A1 werden Verbundelemente aus Kunststoff, an den sich haftend ein Polyisocyanat-Polyadditionsprodukt (PUR) anschließt, beschrieben, wobei die PUR-Formulierung einen Polyesterpolyalkohol der Funktionalität 2 - 3 enthält. Letzterer basiert auf einem Polykondensationsprodukt aus Adipinsäure und/oder Phthalsäureanhydrid sowie Polytetrahydrofuran (PTHF), Hexandiol-1,6, Butandiol-1,4, Monoethylenglykol, Diethylenglykol (DEG), Trimethylolpropan (TMP) und/oder Neopentylglykol.

Aufgabe der Erfindung war es somit, Verbundelemente zur Verfügung zu stellen, die aufgrund ihrer hervorragenden mechanischen Eigenschaften beispielsweise im Automobilbau eingesetzt werden können und bei denen die Haftung zwischen dem Kunststoff und den daran haftenden Polyisocyanat-Polyadditionsprodukten auch bei mechanischer Belastung nicht verlorengeht. Darüber hinaus sollte die Menge an Polyesterpolyolen möglichst gering gehalten werden, da Polyesterpolyole die Hydrolysealterung negativ beeinflussen.

Die Haftung zwischen dem Kunststoff und den daran haftenden Polyisocyanat-Polyadditionsprodukten wird hierbei in Anlehnung an DIN 53 357 A bestimmt (gemäß DIN 53357 A wird die Kraft bestimmt; diese Kraft pro Verbundelementbreite stellt die Haftung (Rollschälwiderstand) dar).

Die vorgenannte Aufgabe konnte durch die erfindungsgemäßen Verbundelemente gelöst werden.

Gegenstand der Erfindung sind Verbundelemente enthaltend (a) thermoplastischen Kunststoff, an den sich haftend (b) das Produkt der Umsetzung einer Reaktionsmischung bestehend aus (i) einem oder mehreren Isocyanaten, (ii) einem oder mehreren Polyesterpolyolen mit einer Funktionalität von 2,5 bis 3,5, bevorzugt 2,7 bis 3,3, und einer Hydroxylzahl von 40 bis 400 mgKOH/g, bevorzugt 90 bis 140 mgKOH/g, basierend auf der Kondensation von Bernsteinsäure mit Diolen mit einem Molekulargewicht von 62 bis 200 g/mol, bevorzugt von 62 bis 150 g/mol, und Triolen mit einem Molekulargewicht von 62 bis 200 g/mol, bevorzugt von 62 bis 150 g/mol, (iii) einem oder mehreren Polyetherpolyolen, gegebenenfalls (iv) Kettenverlängerern und/oder Vernetzern gegebenenfalls in Gegenwart von (v) Katalysatoren, (vi) Treibmitteln und/oder (vii) Hilfs- und/oder Zusatzstoffen anschließt.

Bevorzugt werden die Polyesterpolyole (ii) in einer Gesamtmenge von 0,5 bis 5 Gew.-%, bevorzugt von 1 bis 4 Gew.-%, bezogen auf die Summe der Komponenten (i) bis (vii), eingesetzt.

Die erfindungsgemäßen Verbundelemente können als thermoplastischen Kunststoff (a) einen oder mehrere der üblichen thermoplastischen Kunststoffe enthalten, wie beispielsweise Acrylnitril-Butadien-Styrol (ABS), Polymethylmethacrylat (PMMA), Acrylnitril-Styrol-Acrylester (ASA), Styrol-Acrylnitril (SAN), Polycarbonat (PC), thermoplastisches Polyurethan (TPU), Polyvinylchlorid (PVC), thermoplastische Polyolefine (TPO) (gegebenenfalls nachvernetzt), wie z.B. Polyethylen und Polypropylen, Styrolmaleinsäureanhydridcopolymer (SMA) und Blends daraus. Bevorzugt enthalten die Verbundelemente (a) thermoplastisches PVC, besonders bevorzugt als PVC-Folie.

Die Kunststoffe (a) zur Herstellung der Verbundelemente können in üblicher Form eingesetzt werden, beispielsweise als Folien, bevorzugt mit einer Dicke von 0,2 bis 2 mm.

Derartige Folien sind kommerziell erhältlich, und ihre Herstellung ist allgemein bekannt.

Die Verbundelemente können auf der dem thermoplastischen Kunststoff (a) abgewandten Seite bei Bedarf zusätzlich einen Träger aus duroplastischen oder thermoplastischen Kunststoffen oder ein selbsttragendes Spritzgussteil, z.B. aus faserverstärkten Thermoplasten oder Duroplasten aufweisen. Bevorzugt kommen in der industriellen Praxis Trägermaterialien aus Polyurethan, Polycarbonat/Acrylnitril-Butadien-Styrol-Copolymere, Polypropylen und Acrylnitril-Butadien-Styrol, die gegebenenfalls faserverstärkt, insbesondere glasfaserverstärkt sein können, zum Einsatz.

Erfindungsgemäß schließen sich an den Kunststoff (a) haftend die Polyisocyanat-Polyadditionsprodukte (b) an, beispielsweise Polyurethane, die gegebenenfalls Isocyanurat- und/oder Harnstoffstrukturen aufweisen können. Die Herstellung dieser Polyisocyanat-Polyadditionsprodukte (b), bevorzugt der Polyurethane, die in kompakter oder bevorzugt zelliger Form, besonders bevorzugt offenzelliger Form, beispielsweise als Weichschaumstoff, Halbhartschaumstoff oder Hartschaumstoff, besonders bevorzugt als Halbhartschaumstoff vorliegen können, erfolgt durch die Umsetzung der entsprechenden Komponenten in Gegenwart des Kunststoffes (a).

Überraschenderweise wurde gefunden, dass eine verbesserte Haftung zwischen (a) thermoplastischem Kunststoff und (b) dem Produkt der Umsetzung einer Reaktionsmischung bestehend aus (i) Isocyanat, (ii) Polyesterpolyalkohol, (iii) Polyetherpolyolen, gegebenenfalls (iv) Kettenverlängerern und/oder Vernetzern in Gegenwart von gegebenenfalls (v) Katalysatoren, (vi) Treibmitteln und/oder (vii) Hilfs- und/oder Zusatzstoffen erzielt wird, wenn ein Polyesterpolyol (ii) mit einer Funktionalität von 2,5 bis 3,5, bevorzugt 2,7 bis 3,3 und einer Hydroxylzahl von 40 bis 400 mg KOH/g basierend auf der Kondensation von Bernsteinsäure mit niedermolekularen Diolen mit einem Molekulargewicht von 62 bis 200 g/mol, bevorzugt 62 bis 150 g/mol, und Triolen, mit einem Molekulargewicht von 62 bis 200 g/mol, bevorzugt 62 bis 150 g/mol eingesetzt werden.

Bei einem Einsatz von Polyestern erwartet man, dass die derart hergestellten Verbundelemente aufgrund der Möglichkeit der Hydrolyse der Esterbindung, insbesondere unter feucht-warmen Bedingungen versagen, und es zur Auflösung des Verbundes kommt. Die erfindungsgemäß eingesetzten Polyesterpolyole haben eine geringe Neigung zur Hydrolyse und wirken bereits in geringer Menge haftungsverstärkend. Bevorzugt reichen bereits Mengen von 1 bis 4 Gew.-%, bezogen auf die Summe der Komponenten (ii) bis (vi) (Polyolseite der Reaktionsmischung), aus.

Die erfindungsgemäß eingesetzten Polyesterpolyole basieren vorzugsweise auf der Kondensation von Bernsteinsäure mit Monoethylenglykol, 1,2-Propandiol, 1,6-Hexandiol und 1,1,1-Trimethylolpropan.

Die Herstellung der Polyesterpolyole erfolgt auf die dem Fachmann bekannte Weise durch Polykondensation von Bernsteinsäure mit Diolen und Triolen. Anstelle von oder zusätzlich zu Bernsteinsäure können selbstverständlich auch Bernsteinsäurederivate, wie beispielsweise Bernsteinsäureanhydrid und/oder Bernsteinsäurealkylester eingesetzt werden. Normalerweise erfolgt die Polykondensation in Substanz, d.h. ohne Lösungsmittel. Sie kann aber auch in Gegenwart eines Lösungsmittels erfolgen. Zur Beschleunigung der Polykondensation kann ein Katalysator verwendet werden. Ebenso kann die Reaktion durch Anlegen von Vakuum beschleunigt werden. Man kann sie aber auch bei Normaldruck ausführen, wobei dann vorzugsweise ein inertes Gas, beispielsweise Stickstoff, zum Austragen des entstehenden Reaktionswassers bzw. der Alkylalkohole, besonders gegen Ende der Polykondensation eingesetzt wird.

Die Hydroxylzahl des Polyesterpolyols (ii) wird durch entsprechende Wahl des molaren Verhältnisses von Hydroxylgruppen aus den Diolen und Triolen zu den Carboxylgruppen der Bernsteinsäure bzw. den Carboxylgruppenäquivalenten bei Einsatz von Bernsteinsäurederivaten eingestellt. Die Funktionalität des Polyesterpolyols (ii) wird durch den Anteil an Triolen zu den Diolen eingestellt. Beispielsweise errechnet sich bei einem ein-molaren Ansatz (Die Ansatzgröße des Polyesterpolyols nach Entfernen der Spaltprodukte Wasser oder gegebenenfalls Alkylalkohol entspricht der zahlenmittleren Molmasse.) aus der molaren Menge an eingesetztem 1,1,1-Trimethylolpropan (TMP) die Funktionalität (F) des Polyesterpolyols (ii) nach der folgenden Formel: F=2 + Mole TMP.

Ein weiterer Gegenstand der vorliegenden Erfindung ist ein Verfahren zur Herstellung der erfindungsgemäßen Verbundelemente enthaltend (a) einen thermoplastischen Kunststoff und daran haftend (b) ein Polyisocyanat-Polyadditionsprodukt, welches dadurch gekennzeichnet ist, dass das Polyisocyanat-Polyadditionsprodukt durch Umsetzung einer Reaktionsmischung bestehend aus
(i) einem oder mehreren Isocyanaten,
(ii)einem oder mehreren Polyesterpolyolen mit einer Funktionalität von 2,5 bis 3,5 und einer Hydroxylzahl von 40 bis 400 mg KOH/g basierend auf der Kondensation von Bernsteinsäure mit Diolen mit einem Molekulargewicht von 62 bis 200 g/mol und Triolen mit einem Molekulargewicht von 62 bis 200 g/mol,
(iii) einem oder mehreren Polyetherpolyolen,
(iv) gegebenenfalls Kettenverlängerern und/oder Vernetzern,
   gegebenenfalls in Gegenwart von
(v) Katalysatoren,
(vi) Treibmitteln und/oder
(vii) Hilfs- und/oder Zusatzstoffen
   in Gegenwart von (a) hergestellt wird.

Zur Herstellung der erfindungsgemäßen Verbundelemente können die Isocyanate (i) und die gegenüber Isocyanaten reaktiven Verbindungen (ii) und (iii) sowie gegebenenfalls (iv) in solchen Mengen zur Umsetzung gebracht werden, daß das Äquivalenzverhältnis von NCO-Gruppen aus (i) zur Summe der reaktiven Wasserstoffatome aus (ii) und (iii) und gegebenenfalls (iv) bevorzugt 0,3:1 bis 1,8:1, besonders bevorzugt 0,8:1 bis 1,2:1 und insbesondere 0,9:1 bis 1,1:1, beträgt. Falls das Reaktionsprodukt (b) zumindest teilweise Isocyanuratgruppen gebunden enthält, wird üblicherweise ein Äquivalentverhältnis von NCO-Gruppen zur Summe der reaktiven Wasserstoffatome von 1,5:1 bis 60:1, vorzugsweise 1,5:1 bis 8:1, eingestellt. Die Reaktionsprodukte (b) werden üblicherweise nach dem bekannten One-shot- oder dem ebenfalls bekannten Prepolymerverfahren hergestellt.

Bei dem bekannten Prepolymerverfahren wird in einem ersten Schritt üblicherweise aus (i) Isocyanat und einem Unterschuß, bezogen auf die funktionellen NCO-Gruppen, an Polyetherpolyol (iii) ein Isocyanatgruppen aufweisendes Prepolymer hergestellt, das anschließend mit den übrigen Komponenten (ii) und gegebenenfalls (iv) und gegebenenfalls in Gegenwart von (v) bis (vii) zu den gewünschten Produkten umgesetzt wird.

Die Umsetzung zum Produkt kann beispielsweise durch Handguß, durch Hochdruck- oder Niederdruckmaschinen oder durch RIM-Verfahren (reaction-injection-molding) üblicherweise in offenen oder bevorzugt geschlossenen Formwerkzeugen durchgeführt werden. Geeignete Verarbeitungsmaschinen sind handelsüblich erhältlich (z.B. von den Firmen Isotherm, Hennecke, Kraus Maffei u. a.).

Die Ausgangskomponenten werden üblicherweise in Abhängigkeit vom Anwendungsfall bei einer Temperatur von 10 bis 100°C, vorzugsweise von 20 bis 60°C, gemischt und beispielsweise in das Formwerkzeug eingebracht. Die Vermischung kann im Labormaßstab beispielsweise mittels eines Pendraulik-Rührers durchgeführt werden oder in größerem Maßstab mit üblichen Hochdruckmischköpfen erfolgen.

Die Umsetzung des Reaktionsgemisches kann beispielsweise in üblichen, bevorzugt temperierbaren und verschließbaren Formen durchgeführt werden. Insbesondere bei der Herstellung von möglichst glatten Produkten werden als Formwerkzeuge bevorzugt solche verwendet, deren Oberfläche möglichst glatt oder definiert ornamentiert ist und bevorzugt keine Unebenheiten, Risse, Kratzer oder Verunreinigungen aufweist. Die Oberfläche dieser

Formen kann beispielsweise durch Polieren vorbehandelt werden.

Als Formwerkzeuge zur Herstellung der Verbundelemente können übliche und kommerziell erhältliche Werkzeuge eingesetzt werden, deren Oberfläche beispielsweise aus Stahl, Aluminium, Email, Teflon, Epoxyharz oder einem anderen polymeren Werkstoff besteht, wobei die Oberfläche gegebenenfalls verchromt, beispielsweise hartverchromt sein kann. Bevorzugt sollten die Formwerkzeuge temperierbar sein, um die bevorzugten Temperaturen einstellen zu können, verschließbar sein und zur Ausübung eines Druckes auf das Produkt entsprechend ausgelegt sein. Steht das Formwerkzeug unter Druck, wird vor dem Öffnen der Form normalerweise eine Druckabsenkung durchgeführt (z.B. durch Vorentriegelung und/oder durch gezielte Entlüftung).

Die Umsetzung zu den Polyisocyanat-Polyadditionsprodukten erfolgt üblicherweise bei einer Formtemperatur von 20 bis 220 °C, bevorzugt von 20 bis 120°C, besonders bevorzugt von 20 bis 60 °C. Die Umsetzung der Reaktionsmischung im Formwerkzeug erfolgt erfindungsgemäß in direktem Kontakt mit dem thermoplastischen Kunststoff (a). Dies kann beispielsweise dadurch erreicht werden, dass man (a) vor der Umsetzung, wenn es sich bei (a) um eine Folie handelt, bevorzugt frei von Falten in der Form plaziert und anschließend die Reaktionsmischung in die Form einfüllt und anschließend vorzugsweise die Form verschließt. Es ist ebenso bekannt, dass zunächst die Folie (a) und ggf. andere Bauteile in die Form eingelegt werden, danach die Form verschlossen wird und dann die flüssigen Ausgangskomponenten vermischt und in die geschlossene Form injiziert werden.

Als Isocyanate (i) können allgemein bekannte (cyclo)aliphatische und/oder insbesondere aromatische Polyisocyanate eingesetzt werden. Zur Herstellung der erfindungsgemäßen Verbundelemente eignen sich besonders aromatische Diisocyanate, vorzugsweise Diphenylmethandiisocyanat (MDI) und Toluylendiisocyanat (TDI), ganz besonders bevorzugt MDI. Die Isocyanate können in Form der reinen Verbindung oder in modifizierter Form, beispielsweise in Form von Uretdionen, Isocyanuraten, Allophanaten oder Biureten, vorzugsweise in Form von Urethan- und Isocyanatgruppen enthaltenden Umsetzungsprodukten, sogenannten Isocyanat-Prepolymeren, eingesetzt werden.

Zusätzlich zu den erfindungsgemäß eingesetzten Polyesterpolyolen (ii), kommen weitere, allgemein bekannte Polyetherpolyole als Komponente (iii) zum Einsatz. Sie weisen üblicherweise Molekulargewichte von 300 bis 15000 auf, insbesondere von 320 bis 13000 und bevorzugt eine Funktionalität von 2 bis 6 auf.

Als Komponente (iv) können die allgemein bekannten Kettenverlängerer und/oder Vernetzer eingesetzt werden. Hierbei handelt es sich beispielsweise um Diethanolamin, Triethanolamin, Diethyltoluylendiamin, Glyzerin, 1,2-Ethandiol, Butandiol und Isosorbid.

Als Katalysatoren (v) können übliche Verbindungen eingesetzt werden, die beispielsweise die Reaktion der Komponente (i) mit den Komponenten (ii) und (iii) sowie gegebenenfalls (iv) stark beschleunigen. In Frage kommen beispielsweise tertiäre Amine und/oder organische Metallverbindungen, insbesondere Zinnverbindungen. Bevorzugt werden als Katalysatoren solche eingesetzt, die zu einem möglichst geringen Fogging, d. h. zu einer möglichst geringen Abgabe von flüchtigen Verbindungen aus dem Umsetzungsprodukt (b) führen, beispielsweise Kaliumacetat und/oder Li-Salze und/oder tertiäre Amine mit mindestens einer funktionellen Hydroxyl-Gruppe.

Als Treibmittel (vi) können zur Herstellung von geschäumten Produkten (b), beispielsweise Polyurethanweich-, Halbhart- oder Hartschaumstoffen, die gegebenenfalls Harnstoff und/oder Isocyanuratstrukturen aufweisen können, allgemein bekannte chemisch oder physikalisch wirkende Verbindungen eingesetzt werden. Als chemisch wirkendes Treibmittel kann bevorzugt Wasser eingesetzt werden, welches durch Reaktion mit den Isocyanatgruppen Kohlendioxid bildet. Beispiele für physikalische Treibmittel, d. h. solche inerten Verbindungen, die unter den Bedingungen der Polyurethanbildung verdampfen, sind beispielsweise (cyclo)aliphatische Kohlenwasserstoffe, vorzugsweise solche mit 4 bis 8, besonders bevorzugt 4 bis 6 und insbesondere 5 Kohlenstoffatomen, teilhalogenierte Kohlenwasserstoffe oder Ether, Ketone oder Acetate. Es kann aber auch Kohlenstoffdioxid (CO₂) verwendet werden, welches beispielsweise bis zur Grenze seiner chemischphysikalischen Löslichkeit zu wenigstens einem der Einsatzstoffe (i), (ii), (iii), (iv), (v) und (vii) zugesetzt wird. Die Menge der eingesetzten Treibmittel richtet sich nach der angestrebten Dichte der Schaumstoffe. Die unterschiedlichen Treibmittel können einzeln oder in beliebigen Mischungen untereinander zum Einsatz kommen.

Die Umsetzung erfolgt gegebenenfalls in Anwesenheit von (vii) Hilfs- und/oder Zusatzstoffen, wie z. B. Füllstoffen, Fasern, z. B. in Form von Geweben und/oder Matten, Zellreglern, oberflächenaktiven Verbindungen und/oder Stabilisatoren gegen oxidativen, thermischen oder mikrobiellen Abbau oder Alterung.

Die erfindungsgemäßen Verbundelemente weisen durch die Verwendung der Polyesterpolyole (ii) insbesondere eine deutlich verbesserte Haftung zwischen (a) und (b) auf. Die Haftung zu (a), welches häufig als Trägermaterial fungiert, ist besonders gut, wenn weichmacherhaltiges PVC eingesetzt wird. Erfindungsgemäß konnte durch die Verwendung der erfindungsgemäß eingesetzten Polyesterpolyole erreicht werden, dass die Haftung zwischen (a) und (b) bei Messung in Anlehnung an DIN 53357-A Werte von wenigstens 0,35 N / mm erreicht. Die Normierung der Kraft nach DIN 53357-A auf eine Einheitsbreite der Schaumstreifen von 1 mm erfolgte zwecks besserer Vergleichbarkeit der Messungen, insbesondere bei Verwendung von unterschiedlich breiten Proben. Im Rahmen dieser Anmeldung wurden Proben mit einer Breite von 20 mm hergestellt und untersucht.

Ein weiterer Gegenstand der vorliegenden Erfindung ist die Verwendung der erfindungsgemäßen Verbundelemente in Bauteilen im Fahrzeug- und Flugzeugbau und in der Bauindustrie, beispielsweise als Armaturenbretter, Türverkleidungen, Hutablagen, Konsolen, Armauflagen, Autositzen, Kopfstützen, Dachhimmel oder Türspiegel.

Die Erfindung soll anhand der nachfolgenden Beispiele näher erläutert werden.

### Beispiele:

Die Analysen wurden wie folgt durchgeführt:

Dynamische Viskosität: mit einem Rheometer MCR 51 der Firma Anton Paar entsprechend DIN 53019 mit einem Messkegel CP 50-1 (Durchmesser 50 mm, Winkel 1°) bei Scherraten von 25, 100, 200 und 500 s⁻¹.

| | |
|---|---|
| Hydroxylzahl: | anhand der Norm DIN 53240 |
| Säurezahl: | anhand der Norm DIN 53402 |
| Trennkraft: | nach der Norm DIN 53 357-A |

Die verwendeten Materialien und Abkürzungen haben die folgende Bedeutung:

| | |
|---|---|
| PET A: | Glycerin gestartetes Polyetherpolyol mit Ethylenoxid-Endblock (14 Gew.-%) mit einer OH-Zahl von 35 mg KOH/g und einer nominalen Funktionalität von 3. |
| PET B: | Glycerin gestartetes Polyetherpolyol mit Ethylenoxid-Endblock (19 Gew.-%) mit einer OH-Zahl von 35 mg KOH/g und einer nominalen Funktionalität von 3. |
| PET C: | Ethylendiamin gestartetes Polypropylenoxid mit einer OH-Zahl von 630 KOH/g und einer nominalen Funktionalität von 4. |
| SAN-Polyol: | Hyperlite^{®} Polyol 1650; Polyetherpolyol mit einem Feststoffanteil von ca. 42 Gew.-% an Styrol-Acrylnitril-Copolymer und einer Hydroxylzahl von ca. 20 mg KOH/g von der Fa. Bayer MaterialScience AG. |
| Russ: | ISOPUR^{®} Schwarzpaste N von der Firma iSL-Chemie. |
| Diethyltoluylendiamin: | Von der Firma Albemarle. |
| Jeffcat ZF10: | Einbaubarer Katalysator der Firma Huntsman; N,N,N'-trimethyl-N'-hydroxyethyl-bisaminoethylether. |
| Dabco NE-1070: | N-[3-(dimethylamino)propyl)-harnstoff der Firma Air Products. |
| Isocyanat: | Diphenylmethandiisocyanat-Gemisch der Firma Bayer MaterialScience AG mit einem NCO-Gehalt von 32 Gew.-% NCO, enthaltend 0,05-0,5 Gew.-% 2,2'-MDI, 5,5-7,5 Gew.-% 2,4'-MDI, 50-54 Gew.-% 4,4'-MDI sowie höhere MDI-Homologe. |

Als Folie wurde eine im slush-Verfahren hergestellte Haut auf Basis von PVC- Pulver des Typs DSY 260/02 der Firma Arkema eingesetzt.

### A) Synthese der als Haftvermittler eingesetzten Polyesterpolyole:

In einem 6-Liter Vierhalskolben, ausgestattet mit Heizpilz, mechanischem Rührwerk, Innenthermometer, 40 cm-Füllkörper-Kolonne, Kolonnenkopf, absteigendem Intensivkühler sowie Membranvakuumpumpe, wurden unter Stickstoffüberschleierung Bernsteinsäure, Monoethylenglykol, Propandiol-1,2, Hexandiol-1,6 und 1,1,1-Trimethylolpropan vorgelegt und unter langsamem Rühren auf 200 °C erhitzt, wobei Reaktionswasser abdestillierte. Nach 5 Stunden verringerte man kontinuierlich den Druck über einen Zeitraum von 6 Stunden auf zuletzt 15 mbar und vervollständigte die Reaktion bis zu einer Gesamtreaktionszeit von 30 Std. Die Mengen und Daten sind der nachfolgenden Tabelle 1 zu entnehmen.

Die Werte stimmen nicht mit denen in der Tabelle überein.

**Tabelle 1: Analysedaten der hergestellten Polyesterpolyole**

| **Polyesterpolyol** | | A-1(V) | A-2 |
|---|---|---|---|
| | | | |

| **Polycarbonsäuren:** | | | |
|---|---|---|---|
| Adipinsäure | [Gew.-Tle.] | 63,81 | |
| Bernsteinsäure | [Gew.-Tle.] | | 65.42 |

| **Polyalkohole:** | | | |
|---|---|---|---|
| Ethylenglykol | [Gew.-Tle.] | | 6,30 |
| 1,2-Propandiol | [Gew.-Tle.] | 14,45 | 27,89 |
| 1,6-Hexandiol | [Gew.-Tle.] | 27,56 | 12,00 |
| 1,1,1-Trimethylolpropan | [Gew.-Tle.] | 9,91 | 8.34 |
| Summe | [Gew.-Tle.] | 115,72 | 119,94 |
| Entferntes Wasser | [Gew.-Tle.] | -15,72 | -19,94 |

| **Daten:** | | | |
|---|---|---|---|
| OHZ, gef. | [mg KOH/g] | 109 | 110,5 |
| Säurezahl, gef. | [mg KOH/g] | 0.5 | 0,33 |
| Funktionalität | | 3,2 | 2,8 |

### B) Herstellung der Verbundelemente

Die Herstellung der Verbundelemente erfolgte in einer mit einem Deckel verschließbaren, mit einer Teflonfolie ausgekleideten Aluminiumform der Dimension 200 × 200 × 20 mm bei einer Formtemperatur von 45°C. Eine Folie aus PVC (200 ×200 × 1,2 mm) wurde auf den Boden der Form gelegt. Die Temperatur beider Komponenten (Polyolkomponente und Isocyanatkomponente) betrug 23°C. Man vermischte in einem Pappbecher zunächst die Komponenten der Polyolseite mit einem Pendraulikrührer, gab dann das Isocyanat zu und verrührte für ca. 10 Sekunden. Dann goss man das Gemisch in die offene Form und verschloss diese, wobei die Menge an reagierender Schmelze so gewählt wurde, dass eine mittlere Rohdichte des Schaumes von 120 g/l resultierte. Nach ca. 10 Minuten wurde entformt und das Verbundelement für 24 Stunden bei Raumtemperatur gelagert. Anschließend wurden Streifen von 20 mm Breite herausgeschnitten. Diese Streifen wurden hinsichtlich ihrer Haftungseigenschaften (Haftung zwischen PVC-Folie und Polyurethan) geprüft.

**Tabelle 2: Rezepturen und Eigenschaften der Verbundelemente**

| **Versuch** | | B-1(V) | B-2 |
|---|---|---|---|
| | | | |

| **Polyolseite:** | | | |
|---|---|---|---|
| | | | |
| PET A | [Gew.-Tle.] | 30,4 | 30,4 |
| PET B | [Gew.-Tle.] | 55 | 55 |
| PETC | [Gew.-Tle.] | 2 | 2 |
| Styrol-Acrylnitril-Copolymer | [Gew.-Tle.] | 3,35 | 3,35 |
| Russ | [Gew.-Tle.] | 0,1 | 0,1 |
| Diethyltoluylendiamin | [Gew.-Tle.] | 0,95 | 0,95 |
| Wasser | [Gew.-Tle.] | 2,1 | 2,1 |
| Polyesterpolyol A-1 (V) | [Gew.-Tle.] | 5 | |
| Polyesterpolyol A-2 | [Gew.-Tle.] | | 3 |
| Jeffcat ZF10 | [Gew.-Tle.] | 0,2 | 0,2 |
| Dabco NE1070 | [Gew.-Tle.] | 0,9 | 0,9 |
| | | | |

| **Isocyanat-Seite:** | | | |
|---|---|---|---|
| | | | |
| Isocyanat | [Gew.-Tle.] | 42,64 | 42,17 |
| | | | |
| **Rollschälwiderstand (Haftung zwischen PVC-Folie und PUR) in Anlehnung an DIN 53 357-A** | [**N**/**mm**] | 0,18 | 0,52 |
| **(gemessen an Proben mit 2 cm Breite)** | | | |

Die Trennkraft wird in Newton bestimmt. Zum Zwecke einer besseren Vergleichbarkeit von Proben unterschiedlicher Breite wird auf eine Streifenbreite von 1 mm normiert, indem man die gefundene Kraft durch die Breite der Streifen in mm dividiert.

Die im Beispiel B-2 eingesetzte Rezeptur unterscheidet sich von der im Vergleichsbeispiel B-1 eingesetzten Rezeptur nur in der Art des verwendeten Polyesterpolyols und in der eingesetzten Menge des Polyesterpolyols.

Die Tabelle zeigt, dass mit lediglich 3 Gew.-Teilen des erfindungsgemäß eingesetzten Polyesterpolyols deutlich bessere Werte für die Haftung erreicht werden, als mit 5 Gew.-Teilen des eingesetzten, konventionellen Polyesterpolyols.

## Patentansprüche

1. Verbundelemente enthaltend (a) thermoplastischen Kunststoff, an den sich haftend (b) das Produkt der Umsetzung einer Reaktionsmischung bestehend aus (i) einem oder mehreren Isocyanaten, (ii) einem oder mehreren Polyesterpolyolen mit einer Funktionalität von 2,5 bis 3,5 und einer Hydroxylzahl von 40 bis 400 mg KOH/g basierend auf der Kondensation von Bernsteinsäure mit Diolen mit einem Molekulargewicht von 62 bis 200 g/mol und Triolen mit einem Molekulargewicht von 62 bis 200 g/mol, (iii) einem oder mehreren Polyetherpolyolen, gegebenenfalls (iv) Kettenverlängerern und/oder Vernetzern, gegebenenfalls in Gegenwart von (v) Katalysatoren, (vi) Treibmitteln und/oder (vii) Hilfs- und/oder Zusatzstoffen anschließt.

2. Verbundelemente gemäß Anspruch 1 enthaltend als thermoplastischen Kunststoff (a) einen oder mehrere Kunststoffe aus der Gruppe bestehend aus Polyethylen, Polypropylen, Styrolmaleinsäureanhydridcopolymer (SMA), thermoplastisches Polyurethan (TPU), Polycarbonat (PC), Styrol-Acrylnitril (SAN), Acrylnitril-Butadien-Styrol (ABS), Polyvinylchlorid (PVC) und Blends daraus.

3. Verbundelemente gemäß Anspruch 1, **dadurch gekennzeichnet, dass** das Polyesterpolyol ein Kondensationsprodukt von Bernsteinsäure mit einem oder mehreren Diolen aus der Gruppe bestehend aus Monoethylenglykol, 1,2-Propandiol, 1,4-Butandiol und 1,6-Hexandiol und Triolen mit einem Molekulargewicht von 62 bis 200 g/mol ist.

4. Verbundelemente gemäß Anspruch 1, **dadurch gekennzeichnet, dass** das Polyesterpolyol ein Kondensationsprodukt von Bernsteinsäure mit 1,2-Propandiol und einem oder mehreren Diolen aus der Gruppe bestehend aus Monoethylenglykol, 1,4-Butandiol und 1,6-Hexandiol und Triolen mit einem Molekulargewicht von 62 bis 200 g/mol ist.

5. Verbundelemente gemäß Anspruch 1, **dadurch gekennzeichnet, dass** das Triol Trimethylolpropan ist.

6. Verbundelemente gemäß Anspruch 1, **dadurch gekennzeichnet, dass** das Polyesterpolyol auf der Kondensation von Bernsteinsäure mit Monoethylenglykol, 1,2-Propandiol, 1,6-Hexandiol und 1,1,1-Trimethylolpropan basiert.

7. Verbundelemente nach Anspruch 1, **dadurch gekennzeichnet, daß** das Polyesterpolyol (ii) eine Hydroxylzahl von 90 bis 140 mg KOH/g aufweist.

8. Verbundelemente nach Anspruch 1, **dadurch gekennzeichnet, daß** das Polyesterpolyol in Mengenanteilen von 0,5 bis 5 Gew.-%, bevorzugt von 1 bis 4 Gew.-%, bezogen auf die Summe der Komponenten (i) bis (vii), vorliegt.

9. Verbundelemente gemäß Anspruch 1 mit einer Haftung (Rollschälwiderstand) zwischen dem thermoplastischen Kunststoff (a) und dem Produkt (b) von wenigstens 0,35 N/mm Verbundelementbreite (gemessen in Anlehnung an DIN 53 357 A; Kraft pro Verbundelementbreite).

10. Verfahren zur Herstellung der Verbundelemente gemäß Anspruch 1 bis 9 enthaltend (a) einen thermoplastischen Kunststoff und daran haftend (b) ein Polyisocyanat-Polyadditionsprodukt, **dadurch gekennzeichnet, daß** das Polyisocyanat-Polyadditionsprodukt durch Umsetzung einer Reaktionsmischung bestehend aus
(i) einem oder mehreren Isocyanaten,
(ii)einem oder mehreren Polyesterpolyolen mit einer Funktionalität von 2,5 bis 3,5 und einer Hydroxylzahl von 40 bis 400 mg KOH/g basierend auf der Kondensation von Bernsteinsäure mit Diolen mit einem Molekulargewicht von 62 bis 200 g/mol und Triolen mit einem Molekulargewicht von 62 bis 200 g/mol,
(iii) einem oder mehreren Polyetherpolyolen,
(iv) gegebenenfalls Kettenverlängerern und/oder Vernetzern,
gegebenenfalls in Gegenwart von
(v) Katalysatoren,
(vi) Treibmitteln und/oder
(vii) Hilfs- und/oder Zusatzstoffen
in Gegenwart von (a) hergestellt wird.

11. Verwendung der Verbundelemente gemäß Anspruch 1 bis 9 in Bauteilen im Fahrzeug- und Flugzeugbau und in der Bauindustrie.

12. Bauteile im Fahrzeug- und Flugzeugbau und in der Bauindustrie enthaltend Verbundelemente gemäß Anspruch 1 bis 9.

## Claims

1. Composite elements comprising (a) thermoplastic with, adhering thereto, (b) the product of the reaction of a reaction mixture composed of (i) one or more isocyanates, (ii) one or more polyester polyols with functionality of from 2.5 to 3.5 and a hydroxy number of from 40 to 400 mg KOH/g based on the condensation of succinic acid with diols with molar mass of from 62 to 200 g/mol and triols with molar mass of from 62 to 200 g/mol, (iii) one or more polyether polyols, and optionally (iv) chain extenders and/or crosslinking agents, optionally in the presence of (v) catalysts, (vi) blowing agents and/or (vii) auxiliaries and/or additives.

2. Composite elements according to Claim 1 comprising, as thermoplastic (a) one or more plastics from the group consisting of polyethylene, polypropylene, styrene-maleic anhydride copolymer (SMA), thermoplastic polyurethane (TPU), polycarbonate (PC), styrene-acrylonitrile (SAN), acrylonitrile-butadiene-styrene (ABS), polyvinylchloride (PVC) and blends thereof.

3. Composite elements according to Claim 1, **characterized in that** the polyester polyol is a condensate of succinic acid with one or more diols from the group consisting of monoethylene glycol, 1,2-propanediol, 1,4-butanediol and 1,6-hexanediol and triols with molar mass of from 62 to 200 g/mol.

4. Composite elements according to Claim 1, **characterized in that** the polyester polyol is a condensate of succinic acid with 1,2-propanediol and with one or more diols from the group consisting of monoethylene glycol, 1,4-butanediol and 1,6-hexanediol and triols with molar mass of from 62 to 200 g/mol.

5. Composite elements according to Claim 1, **characterized in that** the triol is trimethylolpropane.

6. Composite elements according to Claim 1, **characterized in that** the polyester polyol is based on the condensation of succinic acid with monoethylene glycol, 1,2-propanediol, 1,6-hexanediol and 1,1,1-trimethylolpropane.

7. Composite elements according to Claim 1, **characterized in that** the hydroxy number of the polyester polyol (ii) is from 90 to 140 mg KOH/g.

8. Composite elements according to Claim 1, **characterized in that** the quantitative proportions present of the polyester polyol are from 0.5 to 5% by weight, preferably from 1 to 4% by weight, based on the entirety of components (i) to (vii).

9. Composite elements according to Claim 1 with adhesion (rolling peel resistance) of at least 0.35 N/mm of composite element width (measured by a method based on DIN 53 357 A; force per unit of composite element width) between the thermoplastic (a) and the product (b).

10. Process for producing the composite elements according to any of Claims 1 to 9 comprising (a) a thermoplastic and adhering thereto, (b) a polyisocyanate polyaddition product, **characterized in that** the polyisocyanate polyaddition product is produced by reaction of a reaction mixture composed of
(i) one or more isocyanates,
(ii) one or more polyester polyols with functionality of from 2.5 to 3.5 and a hydroxy number of from 40 to 400 mg KOH/g based on the condensation of succinic acid with diols with molar mass of from 62 to 200 g/mol and triols with molar mass of from 62 to 200 g/mol,
(iii) one or more polyether polyols,
(iv) optionally chain extenders and/or crosslinking agents,
optionally in the presence of
(v) catalysts,
(vi) blowing agents and/or
(vii) auxiliaries and/or additives
in the presence of (a).

11. Use of the composite elements according to any of Claims 1 to 9 in components in vehicle construction and aircraft construction, and in the construction industry.

12. Components in vehicle construction and aircraft construction and in the construction industry comprising composite elements according to any of Claims 1 to 9.

## Revendications

1. Élément composite contenant (a) un plastique thermoplastique auquel adhère (b) le produit de la réaction d'un mélange réactionnel constitué par (i) un ou plusieurs isocyanates, (ii) un ou plusieurs polyester-polyols d'une fonctionnalité de 2,5 à 3,5 et d'un indice hydroxyle de 40 à 400 mg KOH/g, à base de la condensation d'acide succinique avec des diols d'un poids moléculaire de 62 à 200 g/mol et des triols d'un poids moléculaire de 62 à 200 g/mol, (iii) un ou plusieurs polyéther-polyols, éventuellement (iv) des allongeurs de chaîne et/ou des agents de réticulation, éventuellement en présence de (v) des catalyseurs, (vi) des agents gonflants et/ou (vii) des adjuvants et/ou des additifs.

2. Éléments composites selon la revendication 1, contenant en tant que plastique thermoplastique (a) un ou plusieurs plastiques du groupe constitué par le polyéthylène, le polypropylène, le copolymère styrène-anhydride d'acide maléique (SMA), le polyuréthane thermoplastique (TPU), le polycarbonate (PC), le styrène-acrylonitrile (SAN), l'acrylonitrile-butadiène-styrène (ABS), le polychlorure de vinyle (PVC) et leurs mélanges.

3. Éléments composites selon la revendication 1, **caractérisés en ce que** le polyester-polyol est un produit de condensation d'acide succinique avec un ou plusieurs diols du groupe constitué par le monoéthylène glycol, le 1,2-propanediol, le 1,4-butanediol et le 1,6-hexanediol, et des triols d'un poids moléculaire de 62 à 200 g/mol.

4. Éléments composites selon la revendication 1, **caractérisés en ce que** le polyester-polyol est un produit de condensation d'acide succinique avec du 1,2-propanediol et un ou plusieurs diols du groupe constitué par le monoéthylène glycol, le 1,4-butanediol et le 1,6-hexanediol, et des triols d'un poids moléculaire de 62 à 200 g/mol.

5. Éléments composites selon la revendication 1, **caractérisés en ce que** le triol est le triméthylolpropane.

6. Éléments composites selon la revendication 1, **caractérisés en ce que** le polyester-polyol est à base de la condensation d'acide succinique avec du monoéthylène glycol, du 1,2-propanediol, du 1,6-hexanediol et du 1,1,1-triméthylolpropane.

7. Éléments composites selon la revendication 1, **caractérisés en ce que** le polyester-polyol (ii) présente un indice hydroxyle de 90 à 140 mg KOH/g.

8. Éléments composites selon la revendication 1, **caractérisés en ce que** le polyester-polyol est présent en proportions de 0,5 à 5 % en poids, de préférence de 1 à 4 % en poids, par rapport à la somme des composants (i) à (vii).

9. Éléments composites selon la revendication 1, présentant une adhésion (résistance au dépelliculage) entre le plastique thermoplastique (a) et le produit (b) d'au moins 0,35 N/mm de largeur de l'élément composite (mesurée selon DIN 53 357 A ; force par largeur de l'élément composite).

10. Procédé de fabrication des éléments composites selon les revendications 1 à 9 contenant (a) un plastique thermoplastique auquel adhère (b) un produit de polyaddition de polyisocyanate, **caractérisé en ce que** le produit de polyaddition de polyisocyanate est fabriqué par mise en réaction d'un mélange réactionnel constitué par :
(i) un ou plusieurs isocyanates,
(ii) un ou plusieurs polyester-polyols d'une fonctionnalité de 2,5 à 3,5 et d'un indice hydroxyle de 40 à 400 mg KOH/g, à base de la condensation d'acide succinique avec des diols d'un poids moléculaire de 62 à 200 g/mol et des triols d'un poids moléculaire de 62 à 200 g/mol,
(iii) un ou plusieurs polyéther-polyols,
(iv) éventuellement des allongeurs de chaîne et/ou des agents de réticulation,
éventuellement en présence de
(v) des catalyseurs,
(vi) des agents gonflants et/ou
(vii) des adjuvants et/ou des additifs,
en présence de (a).

11. Utilisation des éléments composites selon les revendications 1 à 9 dans des composants dans la construction d'automobiles et d'avions et dans l'industrie du bâtiment.

12. Composants dans la construction d'automobiles et d'avions et dans l'industrie du bâtiment, contenant des éléments composites selon les revendications 1 à 9.
